Europäisches Patentamt

European Patent Office

Office européen des brevets

(19)

(11) Publication number: **0 162 557 B1**

# EUROPEAN PATENT SPECIFICATION

(12)

(45) Date of publication of patent specification: **11.03.92**   (51) Int. Cl.⁵: **G02B 6/06**, G02B 3/00

(21) Application number: **85302288.7**

(22) Date of filing: **02.04.85**

(54) **Gradient index lens array.**

(30) Priority: **10.04.84 US 598756**

(43) Date of publication of application:
**27.11.85 Bulletin 85/48**

(45) Publication of the grant of the patent:
**11.03.92 Bulletin 92/11**

(84) Designated Contracting States:
**DE FR GB**

(56) References cited:
**EP-A- 0 040 548**

**APPLIED OPTICS, vol. 19, no. 7, April 1980,
New York, USA; M. KAWAZU et al.
"Application of gradient-index fiber arrays to
copying machines", pages 1105-1112**

**APPLIED OPTICS, vol. 19, no. 7, April 1980,
New York, USA; J.D. REES et al. "Some
radiometric properties of gradient-index fi-
ber lenses", pages 1065-1069**

(73) Proprietor: **XEROX CORPORATION
Xerox Square - 020
Rochester New York 14644(US)**

(72) Inventor: **Lama, William Louis
733 Blue Creek Drive
Webster New York 14580(US)**
Inventor: **Rees, James Dunlap
5880 Palmyra Road
Pittsford New York 14534(US)**

(74) Representative: **Hill, Cecilia Ann et al
Rank Xerox Patent Department Albion
House, 55 New Oxford Street
London WC1A 1BS(GB)**

**Description**

The present invention relates to an optical system comprising a gradient index lens array having a plurality of gradient index optical fibers arranged in two rows for transmitting an image of an object at an object plane to an image plane at a magnification other than unity.

Image transmitters comprising bundled gradient index optical fibers are known in the art. US-A-3,658,407 describes such image transmitters having a light conducting fibers made of glass or synthetic resin which have a refractive index distribution in a cross-section thereof that varies parabolically outward from a center portion thereof. Each fiber acts as a focusing lens to transmit part of an image of an object placed near one end. An assembly of fibers, in a staggered two-row array, transmits and focuses an image, at 1:1 magnification, of the object. The fiber lenses are produced under the trade name "SELFOC"; the mark is registered in Japan and owned by Nippon Sheet Glass Co., Ltd..

Numerous techniques are known in the art for manufacturing glass or plastic fibers with index-of-refraction variations. These are usefully summarized in an article entitled "Gradient Index Optics: A Review" by Duncan T. Moore, Applied Optics, 1 April 1980, Volume 19, No. 7, pp. 1035-1038.

It is also known in the art to construct a gradient index lens array capable of forming reduced or enlarged images of a document. Such a lens array is disclosed in US-A-No. 4,331,380. In that patent, specific designs are provided for a one-row array while variations of a two-row design are more broadly disclosed and a double staggered row of fibres is referred to. The same designs are described in US-A-4 405 207 which discloses a method of assembling both the one-row and the two-row versions. In the one-row version (and in each row of the two-row versions) there is only one fibre, located at the centre of the row, that has its axis perpendicular to the object and image planes: the axes of the adjoining fibres in the row are slightly displaced from this orientation and the displacement continues out to the fibres at the end of the array so that each fibre has a specific, non-parallel, orientation with respect to the other fibres in the row.

The present invention provides an optical system for transmitting an image of an object lying in an object plane onto a parallel image plane at a magnification other than unity, said system including an elongate gradient index lens array comprising a plurality of gradient index optical fibers arranged in two transversely-adjacent rows extending lengthwise of the lens array, wherein the fibers of each row lie substantially side-by-side with one end face directed towards the object plane and the other end face directed towards the image plane, and each row has a central axis about which the fibers of that row are symmetrically arranged with the optical axes of the fibers being progressively tilted from said central axis in a fan-like fashion towards the ends of the row, and wherein one at least of said rows has a fiber, called the centre fiber, the axis of which extends along the central axis of that row and is located in a plane extending transversely through the lens array orthogonal to the object and image planes; characterized in that:

the central axes of both rows are located in the said plane orthogonal to the object and image planes;
only one of the rows has a centre fibre, the other row devoid of a centre fibre having two centrally-located fibers one on either side of the central axis of said other row, and the fibers of the two rows are arranged with respect to one another in such a manner that each fiber of one row is offset, in the lengthwise direction of the lens array, from the transversely-adjacent fiber(s) of the other row.

An embodiment of the invention will now be described, by way of example, with reference to the accompanying drawings, in which:

Fig. 1 is a frontal view of a prior art imaging system utilizing a one-row gradient index lens array.

Fig. 2 illustrates a top view of the two-row gradient index lens array according to the present invention.

Fig. 3 is a side view of the central portion of the lens array of Fig. 2, shown in exaggerated detail.

Fig. 4 is an end view of the two-row array showing the tilt angle relationship between the two rows.

Fig. 5 shows axial ray image plane intersections at a central portion of the array.

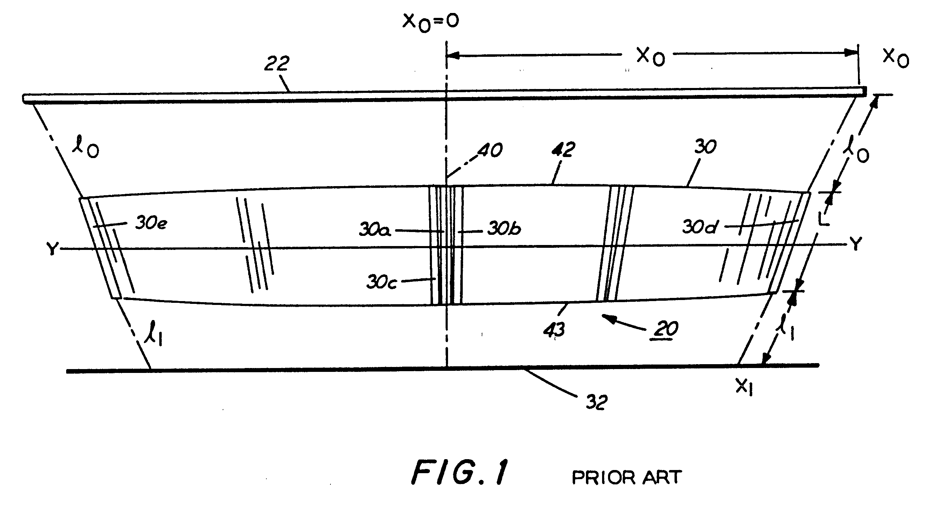

Referring now to Fig. 1, there is shown a front view of a prior art one-row reduction gradient index lens array 20 constructed according to the principles set forth in US-A-4,331,380.

An object 22, which can be a document located in an object plane, is moved past lens array 20 in a direction extending into the page. An illumination means (not shown) provides intense illumination onto successive narrow strips of the document running parallel to the lens array (X-direction). Lens array 20 comprises a single row 30 of gradient index optical fibers. In operation, document 22 is moved past the illuminated area at a speed appropriate to the particular magnification and to the speed of image plane 32 which can be a photosensitive sheet, moving in the same direction as the document. Light reflected from the document is transmitted by lens array 20 as a reduced image onto sheet 32. The reduced image is formed as a contiguous and overlapping plurality of reduced images from each individual fiber, as described more fully in US-A-4,331,380.

For illustrative purposes, assume that document 22 is an A3 original (width = 297 mm) which is to be reduced to A4 size (210mm), i.e. lens 20 is a .707X lens. Lens array 20 comprises a plurality of individual gradient index fibers 30a, 30b, 30c, 30d, 30e, ... which have the same radius (e. g. 0.5 mm), the same axial index of refraction and the same index gradient. The fibers differ from each other in length and in orientation of the fiber axis and in the orientation of their end faces with respect to the object and image planes and in the orientation of their end faces with respect to their axes. As shown, fiber 30a at the center of the array ($X_o$ = 0) is in vertical orientation, i. e. its axis 40 is perpendicular to the object and image planes. The axes of adjoining fibers, i. e. 30b, 30c are slightly displaced from the perpendicularity condition, the displacement continuing out to the fibers at the ends of the array. The interfiber displacement value may be a constant value but other values are possible. The spaces 41 between fibers can be filled with a black silicon resin for light absorbing purposes, as is known in the art.

The light ray from the document that passes down the geometrical axis of an endmost fiber 30d (i. e. the central axial light ray for fiber 30d) images document point $X_o$ = 148.5 mm at the reduced photoreceptor point $X_1$ = $m_o X_o$ = 105.0 mm, where $m_o$ is the desired magnification (.707). The relationship $X_1$ = $m_o X_o$ is maintained for the central axial ray passing through each fiber of the array, and the object and image vertex distances ($1_o$, $l_1$) are chosen to provide the correct magnification near the central axial ray of each fiber.

The lens assembly, as a whole, lies in a vertical plane which is perpendicular to the object plane but the lens is comprised of a plurality of fibers with a plurality of axes, each axis, save the axis of a central fiber, forming a different angle with respect to a line normal to the object plane.

This orientation results in the total conjugate of the light path through each fiber changing from a first value at the center fiber to progressively higher values at the endmost fibers. To accommodate this conjugate change, the lengths of the fibers are progressively decreased from the center outward. A grinding and polishing operation results in the formation of the two smooth convex faces 42, 43.

A single-row array is suitable for some imaging applications. A two-row array, while more costly, doubles the exposure at the image plane and improves image exposure uniformity by reducing exposure modulation caused by the discrete nature of the fiber array. Several two-row configurations are disclosed in US-A-4,331,380. A first embodiment (if Fig. 14b) showed the two transversely adjacent rows positioned parallel to each other and separated by a specified distance. In a second embodiment (if Fig. 14c), the two transversely-adjacent rows were again parallel but were arrayed flush with no intervening space. A third variation (if Fig. 14a) shows the joining of the two transversely adjacent rows at the imaging face with the fibers tilted at some degree of tilt.

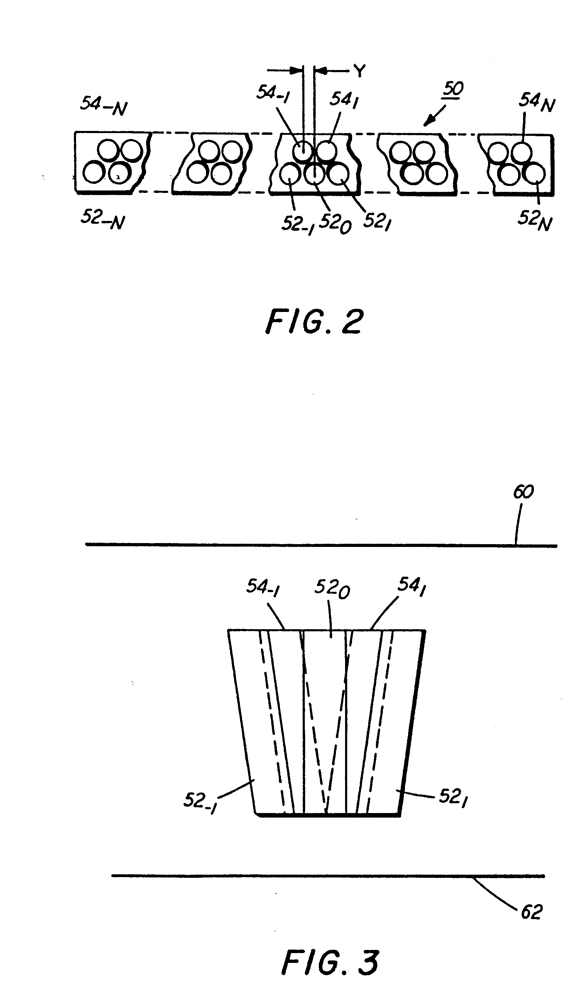

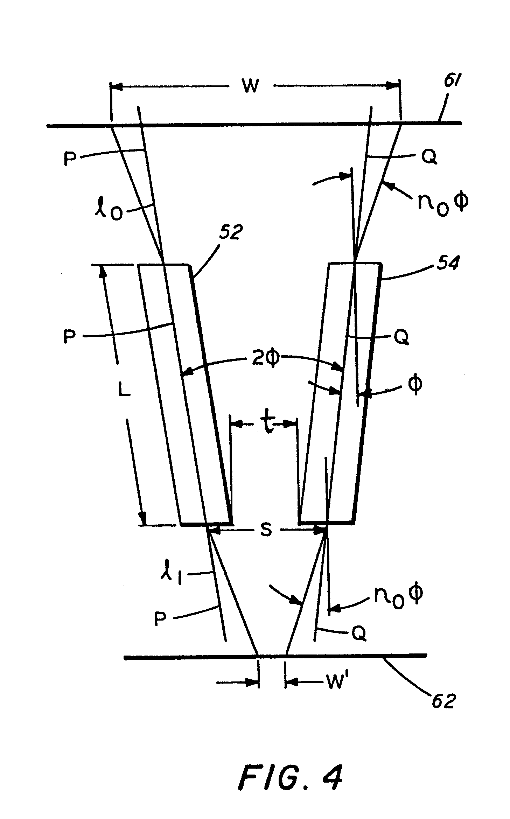

Fig. 2 illustrates a top view of a linear two-row gradient index lens array 50 in accordance with the present invention. Fig. 3 illustrates an enlarged central side view of the array and Fig. 4 an end view. As shown, elongated lens array 50 comprises two transversely-adjacent rows, 52 and 54, each row comprising a plurality of optical fibers $52_{-N}$...$52_O$...$52_N$ and $54_{-N}$...$54_{-1}$, $54_1$, ...$54_N$ respectively. The fibers in each row are arranged in the fan-fold configuration characteristic of a reduction/enlargement array disclosed in US-A-4,331,380 with, however, certain distinctions described below. Array 50 has a perpendicular orientation with respect to object plane 60 and an image plane 62. The individual fibers comprising each row 52, 54 have an orientation with respect to these planes, and to each other, as described in more detail below.

Unlike the lens assembly 20 shown in Fig. 1, the center axis of each fiber in rows 52, 54 as shown in Fig. 4, lies along planes P, Q respectively, each plane extending along the length direction of the array and extending in the length inclined at some angle $\Phi$ with respect to a line normal to the object and image planes. The fibers in each of the rows 52, 54 are arranged symmetrically about a central axis of the respective row. However, and with reference to Fig. 3, which shows a side view of the central portion of array 50, if one considers a plane extending through the center of each fiber into the page, (the transverse or width direction of the array) only one fiber, $52_O$ is arrayed in a condition which results in a right angle between such a plane extending into the page and object and image planes 60, 62. Adjacent fibers $52_1$, $52_2$ are tilted away from central fiber $52_O$, and, as shown in Figs. 2 and 3, none of the fibers in row 54 have a central position with the right angle characteristics of fiber $52_O$ And, as shown in Fig. 4, the center line of fibers in rows 52, 54 at the end face are separated by a distance s, with the adjoining fiber edges separated by a distance t.

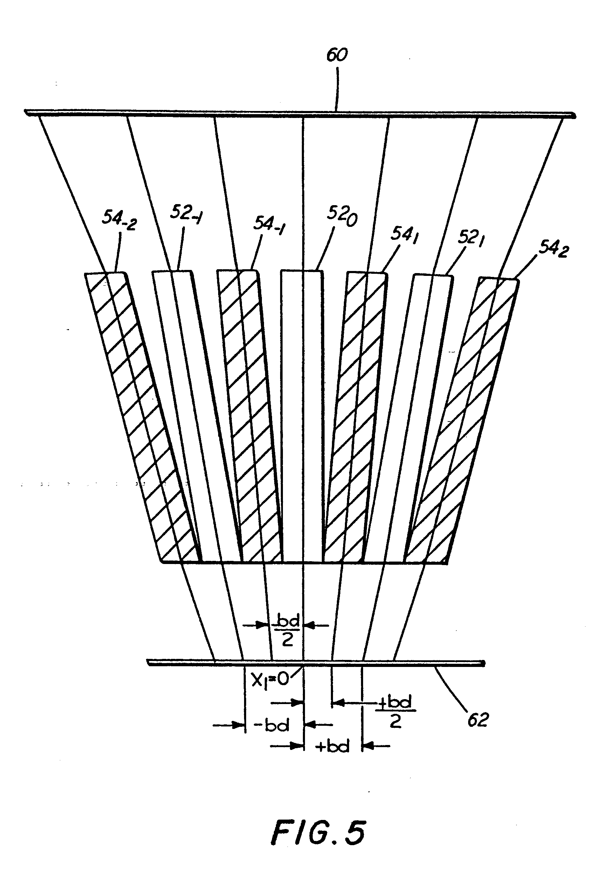

Fig. 5 shows a central axial ray intersection at the image plane for the center fibers of rows 52 and 54. The spacing between the fibers has been exaggerated for descriptive purposes; the actual configuration is the alternate staggered rows shown in Figs. 2 and 3. As shown, the object light rays from object plane 60 pass down the geometrical axis of the fibers (the central axial rays) of row 52, intersect the image plane 62 at points $X_1$ = 0; $\pm$ bd; $\pm$ 2 bd; $\pm$ 3 bd ...where d is the fiber diameter and b is a constant of order unity. For row 54, the central axial rays intersect the image plane at points $X_1$ = $\pm \frac{bd}{2}$ ; $\pm 3 \frac{bd}{2}$ ; $\pm 5 \frac{bd}{2}$ ; .... . Thus, each fiber of row 52 is offset, in the lengthwise direction of the lens arrray, from the transversely-adjacent fibre(s)

3

of row 54, and the projections of the optical fibers overlap to provide an optimization of the exposure uniformity.

For the configuration shown in Fig. 4 it has been determined that the angle of inclination $\Phi$ required for proper imaging at the image plane is given by the expression:

$$m = \frac{s - 2 l_1 \sin (n_0 \phi)}{s + 2 L \sin \phi + 2 l_0 (\sin n_0 \phi)} \qquad (1)$$

where L is the fiber length, $n_0$ is the axial refractive index, S is the distance between the planes P,Q of the two rows at the fiber exit face, $l_0$ is the object vertex distance (i.e. the distance for a central axial light ray from the object plane to the fiber entrance face), $l_1$ is the image vertex distance (i.e. the distance for a central axial light ray from the fibre exit face to the image plane), and m is the magnification. Equation 1 may be solved numerically for $\Phi$ for any given magnification m. In typical cases the inclination $\Phi$ is small and Eq(1) may be solved analytically, yielding

$$\Phi = \frac{s (1 - m)}{2 (mL + ml_0 n_0 + l_1 n_0)} \qquad \text{(radians)}$$

The total angle between the two rows is (2$\Phi$) and the relationships between the distances w and w' must satisfy the expression mw = w' where w is the size of the object and w' is the size of the image.

A specific example of a two-row gradient index lens array designed for a reduction of 0.744X or enlargement of 1.344X is provided in the Table below. Row 52 comprises 221 fibers; row 54, 220. Each fiber has the following parameters: radius R = 0.473 mm; axial refractive index $n_0$ = 1.543 at 500 nm; gradient constant VA = .1288 mm $^{-1}$ at 500 nm. The vertex distance $l_0$ at the center is 21.48 mm; center fiber $52_0$, of row 52 has a length L of 28.60 mm; $l_1$ distance at the center is 15.62 mm for a total center conjugate of 65.70 mm. Total conjugate at the array ends increases to 75.75 mm; $l_0$ increases to 28.10 mm, L decreases to 27.21 mm and 1, increases to 20.44 mm. The Table below lists departure from the perpendicularity condition (tilt) for the fibers for 1/2 of each row (right half measured from center; left half of each row is symmetrical; Xc sign would change) together with the distance from the center point ($X_c$).($X_c$ is the distance from the center of each fiber to the center of fiber $52_0$ measured along the center axis in the lengthwise direction of the array, e.g. line Y-Y of Figure 1 represents the center line in the lengthwise direction of array 20; a similar line can be drawn for lens array 50). For this example, s is chosen to be 2.20 mm and $\Phi$, solving equation (1), is .004 radians or .23°. The distance t between the end face of the two rows is then 2.20 - (.473)2 = 1.25 mm.

4

## TABLE

| FIBER | ROW 52 TILT (DEG) | X$_C$(MM) | FIBER | ROW 54 TILT (DEG) | X$_C$(MM) |
|---|---|---|---|---|---|
| 0 | .000 | .000 | 0 | NONE | |
| 1 | .223 | 1.13 | 1 | .109 | .56 |
| 2 | .451 | 2.25 | 2 | .337 | 1.69 |
| 3 | .679 | 3.38 | 3 | .565 | 2.82 |
| 4 | .0907 | 4.51 | 4 | .793 | 3.94 |
| 5 | 1.134 | 5.63 | 5 | 1.020 | 5.07 |
| 6 | 1.361 | 6.76 | 6 | 1.247 | 6.20 |
| 7 | 1.587 | 7.89 | 7 | 1.474 | 7.32 |
| 8 | 1.813 | 9.01 | 8 | 1.700 | 8.34 |
| 9 | 2,938 | 10.14 | 9 | 1.926 | 9.58 |
| 10 | 2.264 | 11.27 | 10 | 2.152 | 10.70 |
| 11 | 2.489 | 12.39 | 11 | 2.377 | 11.83 |
| 12 | 2.714 | 13.52 | 12 | 2.602 | 12.96 |
| 13 | 2.938 | 14.65 | 13 | 2.826 | 14.08 |
| 14 | 3.162 | 15.77 | 14 | 3.050 | 15.21 |
| 15 | 3.385 | 16.90 | 15 | 3.273 | 16.34 |
| 16 | 3.608 | 18.03 | 16 | 3.497 | 17.46 |
| 17 | 3.830 | 19.15 | 17 | 3.719 | 18.59 |
| 18 | 4.052 | 20.28 | 18 | 3.941 | 19.72 |
| 19 | 4.274 | 21.41 | 19 | 4.163 | 20.84 |
| 20 | 4.495 | 22.53 | 20 | 4.385 | 21.97 |
| 21 | 4.716 | 23.66 | 21 | 4.605 | 23.10 |
| 22 | 4.936 | 24.79 | 22 | 4.826 | 24.22 |
| 23 | 5.155 | 25.91 | 23 | 5.046 | 25.35 |
| 24 | 5.375 | 27.04 | 24 | 5.265 | 26.48 |
| 25 | 5.593 | 28.17 | 25 | 5.484 | 27.60 |
| 26 | 5.811 | 29.29 | 26 | 5.702 | 28.73 |
| 27 | 6.029 | 30.42 | 27 | 5.920 | 29.86 |
| 28 | 6.246 | 31.55 | 28 | 6.138 | 30.98 |
| 29 | 6.463 | 32.67 | 29 | 6.354 | 32.11 |
| 30 | 6.678 | 33.80 | 30 | 6.571 | 33.24 |

5

| | | | | | |
|---|---|---|---|---|---|
| 31 | 6.894 | 34.93 | 31 | 6.786 | 34.36 |
| 32 | 7.109 | 36.05 | 32 | 7.001 | 35.49 |
| 33 | 7.323 | 37.18 | 33 | 7.216 | 36.62 |
| 34 | 7.537 | 38.31 | 34 | 7.430 | 37.74 |
| 35 | 7.750 | 39.43 | 35 | 7.643 | 38.87 |
| 36 | 7.962 | 40.56 | 36 | 7.856 | 40.00 |
| 37 | 8.174 | 41.69 | 37 | 8.068 | 41.12 |
| 38 | 8.385 | 42.81 | 38 | 8.279 | 42.25 |
| 39 | 8.596 | 43.94 | 39 | 8.490 | 43.38 |
| 40 | 8.805 | 45.07 | 40 | 8.701 | 44.50 |
| 41 | 9.015 | 46.19 | 41 | 8.910 | 45.63 |
| 42 | 9.223 | 47.32 | 42 | 9.119 | 46.76 |
| 43 | 9.431 | 48.45 | 43 | 9.327 | 47.88 |
| 44 | 9.638 | 49.57 | 44 | 9.535 | 49.01 |
| 45 | 9.845 | 50.70 | 45 | 9.742 | 50.14 |
| 46 | 10.051 | 51.83 | 46 | 9.948 | 51.26 |
| 47 | 10.256 | 52.95 | 47 | 10.154 | 52.39 |
| 48 | 10.460 | 54.08 | 48 | 10.358 | 53.52 |
| 49 | 10.664 | 55.21 | 49 | 10.562 | 54.64 |
| 50 | 10.867 | 56.33 | 50 | 10.766 | 55.77 |
| 51 | 11.069 | 57.46 | 51 | 10.968 | 56.90 |
| 52 | 11.271 | 58.59 | 52 | 11.170 | 58.02 |
| 53 | 11.472 | 59.71 | 53 | 11.371 | 59.15 |
| 54 | 11.672 | 60.84 | 54 | 11.572 | 60.28 |
| 55 | 11.871 | 61.97 | 55 | 11.771 | 61.41 |
| 56 | 12.069 | 63.10 | 56 | 11.970 | 62.53 |
| 57 | 12.267 | 64.22 | 57 | 12.168 | 63.66 |
| 58 | 12.463 | 65.35 | 58 | 12.365 | 64.79 |
| 59 | 12.659 | 66.48 | 59 | 12.562 | 65.91 |
| 60 | 12.855 | 67.60 | 60 | 12.757 | 67.04 |
| 61 | 13.049 | 68.73 | 61 | 12.952 | 68.17 |
| 62 | 13.242 | 69.86 | 62 | 13.146 | 69.30 |
| 63 | 13.435 | 70.99 | 63 | 13.339 | 70.42 |
| 64 | 13.627 | 72.11 | 64 | 13.531 | 71.55 |
| 65 | 13.818 | 73.24 | 65 | 13.722 | 72.68 |
| 66 | 14.008 | 74.37 | 66 | 13.913 | 73.81 |
| 67 | 14.197 | 75.50 | 67 | 14.102 | 74.93 |

6

| | | | | | |
|---|---|---|---|---|---|
| 68 | 14.385 | 76.62 | 67 | 14.291 | 76.06 |
| 69 | 14.572 | 77.75 | 69 | 14.479 | 77.19 |
| 70 | 14.759 | 78.88 | 70 | 14.666 | 78.32 |
| 71 | 14.944 | 80.01 | 71 | 14.852 | 79.44 |
| 72 | 15.129 | 81.14 | 72 | 15.037 | 80.57 |
| 73 | 15.312 | 82.26 | 73 | 15.221 | 81.70 |
| 74 | 15.495 | 83.39 | 74 | 15.404 | 82.83 |
| 75 | 15.677 | 84.52 | 75 | 15.586 | 83.96 |
| 76 | 15.858 | 85.65 | 76 | 15.767 | 85.08 |
| 77 | 16.037 | 86.78 | 77 | 15.948 | 86.21 |
| 78 | 16.216 | 87.91 | 78 | 16.127 | 87.34 |
| 79 | 16.394 | 89.03 | 79 | 16.305 | 88.47 |
| 80 | 16.571 | 90.16 | 80 | 16.482 | 89.60 |
| 81 | 16.746 | 91.29 | 81 | 16.659 | 90.73 |
| 82 | 16.921 | 92.42 | 82 | 16.834 | 91.86 |
| 83 | 17.095 | 93.55 | 83 | 17.008 | 92.98 |
| 84 | 17.267 | 94.68 | 84 | 17.181 | 94.11 |
| 85 | 17.439 | 95.81 | 85 | 17.353 | 95.24 |
| 86 | 17.610 | 96.93 | 86 | 17.524 | 96.37 |
| 87 | 17.779 | 98.06 | 87 | 17.694 | 97.50 |
| 88 | 17.947 | 99.19 | 88 | 17.863 | 98.63 |
| 89 | 18.115 | 100.32 | 89 | 18.031 | 99.76 |
| 90 | 18.281 | 101.45 | 90 | 18.198 | 100.89 |
| 91 | 18.446 | 102.58 | 91 | 18.364 | 102.02 |
| 92 | 18.610 | 103.71 | 92 | 18.528 | 103.15 |
| 93 | 18.773 | 104.84 | 93 | 18.692 | 104.27 |
| 94 | 18.935 | 105.97 | 94 | 18.854 | 105.40 |
| 95 | 19.095 | 107.10 | 95 | 19.015 | 106.53 |
| 96 | 19.255 | 108.23 | 96 | 19.175 | 107.66 |
| 97 | 19.413 | 109.36 | 97 | 19.334 | 108.79 |
| 98 | 19.570 | 110.49 | 98 | 19.491 | 109.92 |
| 99 | 19.726 | 111.62 | 99 | 19.648 | 111.05 |
| 100 | 19.880 | 112.75 | 100 | 19.803 | 112.18 |
| 101 | 20.034 | 113.88 | 101 | 19.957 | 113.31 |
| 102 | 20.186 | 115.01 | 102 | 20.110 | 114.44 |
| 103 | 20.337 | 116.14 | 103 | 20.262 | 115.57 |
| 104 | 20.487 | 117.27 | 104 | 20.412 | 116.71 |

7

| 105 | 20.636 | 118.40 | 105 | 20.562 | 117.84 |
|---|---|---|---|---|---|
| 106 | 20.783 | 119.53 | 106 | 20.710 | 118.97 |
| 107 | 20.929 | 120.66 | 107 | 20.856 | 120.10 |
| 108 | 21.074 | 121.79 | 108 | 21.002 | 122.36 |
| 109 | 21.218 | 122.93 | 109 | 21.146 | 122.36 |
| 110 | 21.470 | 124.06 | 110 | 21.289 | 123.49 |

The array 50 can be assembled according to the principles generally set forth in US-A-4,331,380 and US-A-Patent 4,359,267.

In summary, an exemplary two-row configuration has been disclosed, having the following characteristics:

1. The central fiber axes of each row lie along planes in the lengthwise direction of the lens assembly, which are inclined with respect to each other and with respect to a lengthwise plane normal to the object and image planes.

2. The imaging faces of the fibers of adjoining rows are separated by a small distance.

3. The center lines of adjacent fibers in the width (transverse) direction, ie transversely-adjacent fibers of the two rows, are offset from each other in the lengthwise direction of the lens assembly.

4. A plane through a centrally located fiber of one row only extending in the width (transverse) direction makes a right angle with the object and image planes.

As a final point, as the data for the example set forth above indicates, the inclination angle $\Phi$ and fiber end face spacings s are very small quantities. Also, the fiber-to-fiber tilt increments are very small. Figs. 2-5 therefore depict greatly exaggerated tilt and spacing parameters for ease of description purposes.

## Claims

1. An optical system for transmitting an image of an object lying in an object plane (60) onto a parallel image plane (62) at a magnification other than unity, said system including an elongate gradient index lens array (50) comprising a plurality of gradient index optical fibers ($52_{-N}$ ... $52_0$ .. $52_N$; $54_{-N}$ ... $54_{-1}$, $54_1$ ... $54_N$) arranged in two transversely-adjacent rows (52, 54) extending lengthwise of the lens array, wherein the fibers of each row lie substantially side-by-side with one end face directed towards the object plane and the other end face directed towards the image plane, and each row has a central axis (40) about which the fibers of that row are symmetrically arranged with the optical axes of the fibers being progressively tilted from said central axis in a fan-like fashion towards the ends of the row, and wherein one at least of said rows (52) has a fiber ($52_0$), called the centre fiber, the axis of which extends along the central axis of that row and is located in a plane extending transversely through the lens array orthogonal to the object and image planes; characterized in that:
the central axes of both rows are located in the said plane orthogonal to the object and image planes;
only one of the rows (52) has a centre fibre (520), the other row (54) devoid of a centre fibre having two centrally-located fibers (54-1, 541) one on either side of the central axis of said other row, and
the fibers of the two rows are arranged with respect to one another in such a manner that each fiber of one row is offset, in the lengthwise direction of the lens array, from the transversely-adjacent fiber(s) of the other row.

2. The optical system of claim 1, in which the optical axes of the fibers in each row lie in a respective single plane (P,Q) extending in the lengthwise direction of the lens array, the respective planes being inclined away from each other, and the fiber end faces directed towards the image plane in one row being spaced apart from those in the other row.

3. The optical system of claim 2, in which the inclination angle $\Phi$ of the respective planes is provided by the expression

$$\Phi = s(1-m)/2(mL + ml_0 n_0 + l_1 n_0)$$

where m is the magnification, L is the fiber length, $n_0$ is the axial refractive index, $l_0$ is the object vertex distance, $l_1$ is the image vertex distance, and s is the distance between the planes (P, Q) of the two rows at the fibre end faces directed towards the image plane.

**Revendications**

1. Système optique pour transmettre une image d'un objet se trouvant dans un plan objet (60) sur un plan image parallèle (62) à un grossissement autre que l'unité, le système comportant une disposition de lentilles allongées à gradient d'index (50) comprenant une multitude de fibres optiques à gradient d'index ($52_{-N}$...$52_0$...$52_N$ ; $54_{-N}$...$54_{-1}$, $54_1$, ...$54_N$) disposées en deux rangées transversalement contiguës (52, 54) s'étendant dans le sens de la longueur de la disposition des lentilles, dans lequel les fibres de chaque rangée se trouvent pratiquement côte à côte avec une face d'extrémité dirigée vers le plan objet et l'autre face d'extrémité dirigée vers le plan image et chaque rangée comporte un axe central (40) autour duquel les fibres de cette rangée sont symétriquement disposées avec les axes optiques des fibres étant progressivement inclinés de l'axe central dans une disposition en éventail vers les extrémités de la rangée, et dans lequel au moins une des rangées (52) comporte une fibre ($52_0$) appelée la fibre centrale, dont l'axe s'étend le long de l'axe central de cette rangée et est située dans un plan s'étendant transversalement à travers la disposition des lentilles orthogonale aux plans objet et image, caractérisé en ce que :

les axes centraux des deux rangées sont situés dans le plan orthogonal aux plans objet et image,

seulement une des rangées (52) comporte une fibre centrale ($50_0$), l'autre rangée (54) privée de fibre centrale comportant deux fibres placées centralement ($54_{-1}$, $54_1$) une sur chaque côté de l'axe central de l'autre rangée, et

les fibres des deux rangées sont disposées les unes par rapport aux autres d'une manière telle que chaque fibre d'une rangée est décalée dans le sens de la longueur de la disposition des lentilles, à partir des fibres transversalement contiguës de l'autre rangée.

2. Système optique selon la revendication 1, dans lequel les axes optiques des fibres dans chaque rangée se trouvent dans un plan unique respectif (P, Q) s'étendant dans le sens de la longueur de la disposition des lentilles, les plans respectifs étant inclinés vers l'extérieur l'un par rapport à l'autre et les faces d'extrémité des fibres dirigées vers le plan image dans une rangée étant séparées de celles dans l'autre rangée.

3. Système optique selon la revendication 2, dans lequel l'angle d'inclinaison $\Phi$ des plans respectifs est fourni par l'expression

$$\Phi = s(1-m)/2(mL + ml_0 n_0 + l_1 n_0)$$

où m est le grossissement, L est la longueur de la fibre, $n_0$ est l'indice de réfraction axial, $l_0$ est la distance au sommet de l'objet, $l_1$ est la distance au sommet de l'image et s est la distance entre les plans (P, Q) des deux rangées au niveau des faces d'extrémité des fibres dirigées vers le plan image.

**Patentansprüche**

1. Optisches System zum Übertragen eines in einer Objektebene (60) liegenden Objekts auf eine parallele Bildebene (62) mit einer Vergrößerung größer als eins, wobei das System ein längliches Linsensystem (50) mit Brechungsindexgradienten umfaßt, das eine Mehrzahl von optischen Fasern ($52_{-N}$ ... $52_0$ ... $52_N$; $54_{-N}$ ... $54_{-1}$, $54_1$ ... $54_N$) mit Brechungsindexgradienten umfaßt, die in zwei transversal benachbarten Reihen (52, 54) angeordnet sind, die sich längs zu der Linsenanordnung erstrecken, wobei die Fasern jeder Reihe im wesentlichen Seite an Seite liegen, wobei eine Endfläche zur Objektebene gerichtet ist und die andere Endfläche zur Bildebene gerichtet ist, und jede Reihe eine zentrale Achse (40) besitzt, um die die Fasern der Reihe symmetrisch angeordnet sind, wobei die optischen Achsen der Fasern zunehmend von der Achse fächerförmig zu den Enden der Reihe gekippt sind, und wobei wenigstens eine der Reihen (52) eine Faser ($52_0$) besitzt, die sogenannte zentrale Faser, deren Achse sich entlang der zentralen Achse dieser Reihe erstreckt und in einer Ebene angeordnet ist, die sich transversal durch die Linsenanordnung senkrecht zur den Objekt- und Bildebenen erstreckt; dadurch gekennzeichnet, daß:

die zentralen Achsen beider Reihen in der Ebene senkrecht zu den Objekt- und Bildebenen angeordnet sind;

nur eine der Reihen (52) eine zentrale Faser (520) besitzt, wobei die andere Reihe (54) ohne eine zentrale Faser zwei zentral angeordnete Fasern (54-1, 541) auf beiden Seiten der zentralen Achse der anderen Reihe besitzt, und

die Fasern der beiden Reihen gegenseitig so angeordnet sind, daß jede Faser einer Reihe in der Längsrichtung der Linsenanordnung gegenüber der (den) transversal benachbarten Faser(n) der anderen Reihe versetzt ist.

2. Optisches System nach Anspruch 1, bei dem die optischen Achsen der Fasern in jeder Reihe jeweils in einer einzigen Ebene (P, Q) liegen, die sich in der Längsrichtung der Linsenanordnung erstreckt, wobei die jeweiligen Ebenen Voneinander weg geneigt sind, und wobei die Faserendflächen, die in einer Reihe zur Bildebene gerichtet sind, von denen in der anderen Reihe getrennt sind.

3. Optisches System nach Anspruch 2, bei dem der Neigungswinkel Φ der jeweiligen Ebenen gegeben wird durch den Ausdruck:

$$\Phi = s(1-m) / 2(mL + ml_0 n_0 + l_1 n_0)$$

wobei m die Vergrößerung, L die Faserlänge, $n_0$ der axiale Brechungsindex, $l_0$ der Scheitelabstand des Objekts, $l_1$ der Scheitelabstand des Bildes und s der Abstand zwischen den Ebenen (P, Q) der beiden Reihen an den zur Bildebene gerichteten Faserendflächen ist.

**FIG.1**    PRIOR ART

EP 0 162 557 B1

FIG. 2

FIG. 3

FIG. 4

*FIG.5*